# EUROPEAN PATENT APPLICATION

(11) **EP 3 670 687 A1**
(43) Date of publication of application: **24.06.2020**
(21) Application number: 18846805.2
(22) Date of filing: 23.07.2018
(51) Int. Cl.: C22B 23/00, C22B 3/08

(54) **LEACHING TREATMENT METHOD, AND WET SMELTING METHOD OF NICKEL OXIDE ORE**

(30) Priority: 16.08.2017 JP 2017157124
(71) Applicant: Sumitomo Metal Mining Co., Ltd., Tokyo 105-8716 (JP)
(72) Inventor: TANAKA Masahiro, Tokyo 105-8716 (JP); OISHI Takao, Tokyo 105-8716 (JP); KITAZAKI Tooru, Tokyo 105-8716 (JP)
(74) Representative: Jones, Nicholas Andrew
(86) International application number: PCT/JP2018/027519
(87) International publication number: WO 2019/035319

(57) **Abstract**

A leaching treatment method of nickel oxide ore is provided which enables effectively reducing the amount used of sulfuric acid while maintaining a high nickel leaching rate. In this leaching treatment method, leaching treatment is performed by adding sulfuric acid to a slurry of magnesium-containing nickel oxide ore (the ore slurry), resulting in a leached slurry formed from leachate containing nickel and leach residue, wherein the amount of sulfuric acid added is adjusted, in accordance with the ratio (Mg/Ni ratio) of magnesium content to nickel content in the ore slurry, such that the free sulfuric acid concentration in the obtained leached slurry is adjusted to a prescribed concentration.

## Description

### TECHNICAL FIELD

The present invention relates to a leaching treatment method of nickel oxide ore, and more specifically, relates to a leaching treatment method of leaching nickel by adding sulfuric acid to a slurry of nickel oxide ore, and a hydrometallurgical method of nickel oxide ore to which the leaching treatment method is applied.

### BACKGROUND ART

As a method for recovering a valuable metal such as nickel or cobalt from low grade nickel oxide ore having a low grade of nickel, by hydrometallurgy, for example, a high pressure acid leach (HPAL) method for performing leaching under a high temperature and a high pressure by adding a sulfuric acid to an ore slurry, as described in Patent Document 1, has been performed.

The low grade nickel oxide ore is broadly divided into limonite-based ore having a high grade of iron and a low grade of an alkaline component such as magnesium or silica, and saprolite-based ore containing a lot of alkaline components, and the limonite-based ore is mainly used as a raw material of the HPAL method.

A method for not only leaching the valuable metal such as nickel at a high leaching rate, but also effectively reducing the amount used of sulfuric acid of which the price has increased recently is required in the HPAL method. In a leaching treatment of the HPAL method, it is known that other components contained in the ore, such as magnesium, aluminum, iron, and chromium, in addition to nickel, are also leached, and in particular, most of magnesium is leached and consumes a large amount of sulfuric acids, and thus, is an impurity that is not economically preferable.

Further, in the leaching treatment, a leaching reaction of nickel and magnesium progresses as represented in the following reaction formula, and thus, for example, in a case where the grade of magnesium in the ore is high, a reaction of Formula (2) described below preferentially progresses, and thus, a reaction of Formula (1) for leaching nickel is inhibited. For this reason, a decrease in a nickel leaching rate is also caused.

NiO + H₂SO₄ = NiSO₄ + H₂O ... (1)

MgO + H₂SO₄ = MgSO₄ + H₂O ... (2)

As described above, magnesium is contained in the nickel oxide ore, as an impurity, in addition to the valuable metal such as nickel and cobalt. For this reason, for example, in a case where a nickel content to a magnesium content (hereinafter, referred to as an "Ni/Mg ratio") is low in the nickel oxide ore, it is necessary to increase the amount of sulfuric acid added in order to maintain a target nickel leaching rate in the leaching treatment. However, in a case where the amount of sulfuric acid added increases, primary unit of a sulfuric acid increases and the cost increases, and the progress of the corrosion of facilities that are used in the leaching treatment is accelerated. For this reason, in a real operation, the concentration of sulfuric acid that is not reacted and is contained in the slurry after the leaching reaction (a free sulfuric acid concentration) is monitored, and the amount of sulfuric acid added is controlled such that the free sulfuric acid concentration is in a prescribed range.

Examples of means for accelerating the velocity of the leaching reaction of nickel include a method for increasing the free sulfuric acid concentration or a reaction temperature. However, the method is not economically preferable from the viewpoint of increasing the amount of thermal energy used for increasing the amount of sulfuric acid consumed or the reaction temperature, such as vapor. In addition, examples of means for obtaining a high nickel leaching rate include a method for performing secondary leaching (for example, Patent Document 2), and the like, but the number of steps increases, and thus, the method is not desirable from the viewpoint of a high efficiency operation.
Patent Document 1: Japanese Unexamined Patent Application, Publication No. 2005-350766
Patent Document 2: Japanese Unexamined Patent Application (Translation of PCT Application), Publication No. 2003-514110 DISCLOSURE OF THE INVENTION

### Problems to be Solved by the Invention

The present invention has been proposed in consideration of such circumstances, and an object thereof is to provide a leaching treatment method of nickel oxide ore which enables effectively reducing the amount used of sulfuric acid while maintaining a high nickel leaching rate.

### Means for Solving the Problems

The present inventors have conducted intensive studies for attaining the object described above. As a result thereof, it has been found that the amount of sulfuric acid added to an ore slurry is adjusted, in accordance with a ratio (a Mg/Ni ratio) of a magnesium content to a nickel content in the ore slurry, such that a free sulfuric acid concentration in an obtained leached slurry is adjusted to a prescribed concentration, and thus, it is possible to effectively reduce the amount used of sulfuric acid while maintaining a high nickel leaching rate, and the present invention has been completed.
(1) The first invention of the present invention is a leaching treatment method for performing a leaching treatment by adding a sulfuric acid to a slurry of magnesium-containing nickel oxide ore (an ore slurry), resulting in a leached slurry formed from a leachate containing nickel and a leach residue, in which an amount of sulfuric acid added is adjusted, in accordance with a ratio (a Mg/Ni ratio) of a magnesium content to a nickel content in the ore slurry, such that a free sulfuric acid concentration in the obtained leached slurry is adjusted to a prescribed concentration.
(2) The second invention of the present invention is a leaching treatment method according to the first invention, in which the amount of sulfuric acid added is adjusted such that the free sulfuric acid concentration in the leached slurry at the end of the leaching treatment is in a range of 40 g/L to 50 g/L.
(3) The third invention of the present invention is a leaching treatment method, according to the second invention, in which in a case where the Mg/Ni ratio in the ore slurry is less than 1.8, the amount of sulfuric acid added is adjusted such that the free sulfuric acid concentration in the leached slurry at the end of the leaching treatment is less than 50 g/L.
(4) The fourth invention of the present invention is a leaching treatment method, according to any one of the first to third invention, in which the nickel content in the ore slurry is in a range of 1.0 mass% to 2.0 mass%.
(5) The fifth invention of the present invention is a hydrometallurgical method of nickel oxide ore for recovering a valuable metal including nickel from the nickel oxide ore by using a sulfuric acid, the method including: a leaching step for performing a leaching treatment by adding a sulfuric acid to a slurry of the nickel oxide ore (an ore slurry), resulting in a leached slurry formed from a leachate containing nickel and a leach residue, in which in the leaching step, an amount of sulfuric acid added is adjusted, in accordance with a magnesium content to a nickel content (a Mg/Ni ratio) in the ore slurry, such that a free sulfuric acid concentration in the obtained leached slurry is adjusted to a prescribed concentration.

### Effects of the Invention

According to the present invention, in the leaching treatment method of nickel oxide ore, it is possible to effectively reduce the amount used of sulfuric acid while maintaining a high nickel leaching rate.

### BRIEF DESCRIPTION OF THE DRAWINGS

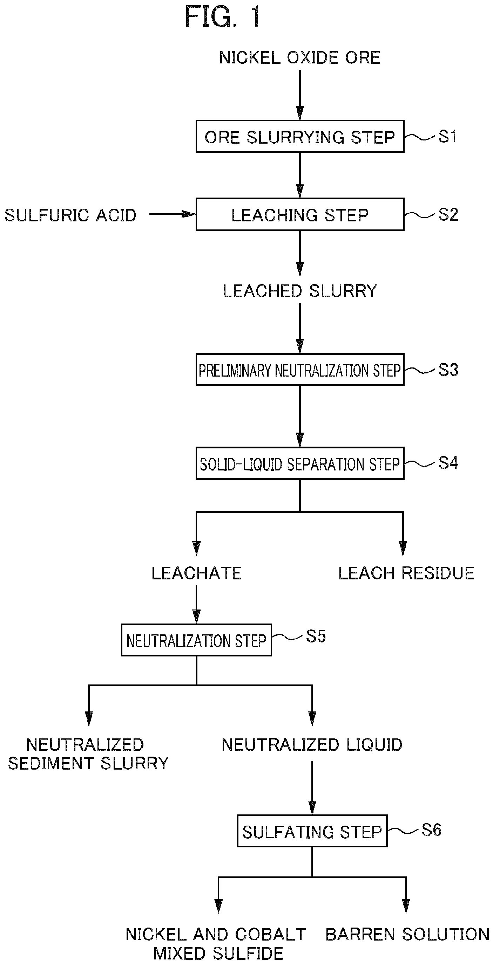

Fig. 1 is a process chart illustrating an example of a flow of a hydrometallurgical method of nickel oxide ore.

### PREFERRED MODE FOR CARRYING OUT THE INVENTION

Hereinafter, a specific embodiment of the present invention (hereinafter, referred to as "this embodiment") will be described in detail. The present invention is not limited to the following embodiment, but can be variously changed within a range not changing the gist of the present invention. Note that, here, the expression of "X to Y" (X and Y are arbitrary numerical values), in particular, indicates "greater than or equal to X and less than or equal to Y", unless otherwise specified.

### <<1. Leaching Treatment Method of Nickel Oxide Ore>>

A leaching treatment method according to this embodiment is a method for performing a leaching treatment by adding a sulfuric acid to a slurry of magnesium-containing nickel oxide ore (an ore slurry), resulting in a leached slurry formed from a leachate containing nickel and a leach residue. Such a leaching treatment method, for example, is performed under the environment of a high temperature high pressure, by using a high temperature pressurized vessel (an autoclave).

Specifically, in such a leaching treatment method, the amount of sulfuric acid added to the ore slurry is adjusted, in accordance with a ratio (a Mg/Ni ratio) of a magnesium content to a nickel content in the ore slurry, such that a free sulfuric acid concentration in the obtained leached slurry is adjusted to a prescribed concentration.

According to such a method, it is possible to effectively reduce the amount of sulfuric acid added to the ore slurry (a used amount) while maintaining a high nickel leaching rate from the nickel oxide ore. Accordingly, it is possible to prevent an increase in the cost required for the treatment and to perform an efficient treatment, and it is possible to suppress the corrosion of the facilities (the autoclave) used in the leaching treatment. In addition, the free sulfuric acid concentration in the generated leached slurry is also effectively reduced, in accordance with a reduction in the amount used of sulfuric acid, and thus, it is possible to reduce the amount of neutralizer used for neutralizing the free sulfuric acid.

Examples of the nickel oxide ore that is a target of the leaching treatment mainly include a so-called laterite ore such as limonite ore and saprolite ore. A contained amount of nickel (a nickel content) in the laterite ore, in general, is approximately 1.0 mass% to 2.0 mass%, and nickel is contained as a hydroxide or a silicon magnesia (magnesium silicate) mineral. In addition, a contained amount of iron is approximately 10 mass% to 50 mass%, and iron is mainly in the form of a trivalent hydroxide (goethite), but a part of divalent iron is contained in the silicon magnesia mineral. In addition, oxide ore containing a valuable metal such as nickel, cobalt, manganese, and copper, for example, manganese nodules and the like that are stored in the deep seabed are used in addition to the laterite ore.

In addition, magnesium is contained in the nickel oxide ore, as an impurity. As described above, in a case where magnesium is contained in the nickel oxide ore, a leaching reaction of magnesium progresses prior to a leaching reaction of nickel, and thus, the leaching reaction of nickel may be inhibited. In this embodiment, the amount of sulfuric acid added to the ore slurry is adjusted, in accordance with a relationship between the magnesium content and the nickel content in the ore slurry. The details will be described below.

In the leaching treatment, the nickel oxide ore is classified at a prescribed classification point, and oversized ore particles are removed, and then, water is added to undersized ore particles to prepare an ore slurry, and a sulfuric acid is added to the prepared ore slurry, and thus, the leaching reaction occurs. The concentration of ore slurry is not particularly limited, but it is preferable to prepare the ore slurry such that an ore concentration in the slurry is approximately 15 mass% to 45 mass%. In a case where a slurry concentration is less than 15 mass%, large facilities are required to obtain the same detention time in the leaching treatment. In addition, there is a possibility that the amount of sulfuric acid added also relatively increases. On the other hand, in a case where the slurry concentration is greater than 45 mass%, it is possible to decrease the scale of facilities, but it is difficult to transport a high concentration slurry (such as frequent occurrence of intratubular obstruction and the requirement of energy).

In the leaching treatment, the sulfuric acid is added to the ore slurry under a high temperature and a high pressure, and thus, the leaching of nickel, cobalt, or the like as a sulfate and the immobilization of leached iron sulfate as hematite are performed by a leaching reaction and a high temperature thermal hydrolysis reaction represented by Formulas (i) to (v) described below. Note that, the immobilization of iron ions does not completely progress, and thus, in general, divalent iron ions and trivalent iron ions are contained in a liquid portion of the obtained leached slurry, in addition to nickel, cobalt, and the like.
(Leaching Reaction)

MO + H₂SO₄ → MSO₄ + H₂O ... (i)

(In the formula, M represents Ni, Co, Fe, Zn, Cu, Mg, Cr, Mn, and the like)

2Fe(OH)₃ + 3H₂SO₄ → Fe₂(SO₄)₃ + 6H₂O ... (ii)

FeO + H₂SO₄ → FeSO₄ + H₂O ... (iii)

(High Temperature Thermal Hydrolysis Reaction)

2FeSO₄ + H₂SO₄ + 1/2O₂ → Fe₂(SO₄)₃ + H₂O ... (iv)

Fe₂(SO₄)₃ + 3H₂O → Fe₂O₃ + 3H₂SO₄ ... (v)

A temperature in the leaching treatment (a leaching reaction temperature) is not particularly limited, but is approximately 220°C to 280°C, and it is preferable that the temperature is approximately 240°C to 270°C. The reaction is performed in such a temperature range, and thus, it is possible to immobilize most of iron in the ore, as hematite. In a case where the reaction temperature is lower than 220°C, the high temperature thermal hydrolysis reaction is slowed down, and thus, iron is dissolved and remains in a reaction solution, the load of a cleaning liquid for removing iron increases, and it is difficult to separate iron from nickel. On the other hand, in a case where the reaction temperature is higher than 270°C, the high temperature thermal hydrolysis reaction itself is accelerated, but it is difficult to select the material of a reaction vessel that is used in the high temperature pressurized leaching, and a thermal energy cost for increasing the temperature increases.

The amount of sulfuric acid added which is used in the leaching treatment, in general, is an excessive amount, and for example, is the amount of material of approximately 300 kg to 400 kg per 1 ton of the ore. However, it is preferable to minimize the amount used of sulfuric acid, and thus, it is desirable to suppress the cost of sulfuric acid used. Note that, it is not preferable the amount of sulfuric acid added per 1 ton of the ore is greater than 400 kg since the cost of sulfuric acid increases. On the other hand, as described above, magnesium that is the target of the leaching treatment is contained in the nickel oxide ore, as an impurity, and thus, it is necessary to maintain a high nickel leaching rate.

Therefore, in this embodiment, the amount of sulfuric acid added is adjusted, in accordance with the relationship between the magnesium content and the nickel content in the ore slurry. Specifically, the free sulfuric acid concentration in the leached slurry that is obtained by the leaching treatment is adjusted to a prescribed concentration, in accordance with the ratio (the Mg/Ni ratio) of the magnesium content to the nickel content in the ore slurry. For example, the amount of sulfuric acid added is adjusted, in accordance with the Mg/Ni ratio in the ore slurry, such that the free sulfuric acid concentration in the leached slurry is in a range of 40 g/L to 50 g/L.

The free sulfuric acid concentration in the leached slurry is the concentration of free sulfuric acid at the end of the leaching, and is not particularly limited, but it is preferable that the free sulfuric acid concentration is approximately 25 g/L to 50 g/L, and it is more preferable that the free sulfuric acid concentration is approximately 40 g/L to 50 g/L. The amount of sulfuric acid added is adjusted to obtain such a free sulfuric acid concentration, and thus, it is possible to leach nickel from the nickel oxide ore containing magnesium, at a high leaching rate. In addition, according to such a free sulfuric acid concentration, it is possible to stably generate the leach residue having a high real density and to improve solid-liquid separation properties of the leached slurry.

Here, the nickel content and the magnesium content in the ore slurry indicate a contain ratio (the grade) of each of nickel and magnesium in a solid content of the ore slurry. The nickel content in the solid content of the ore slurry formed from the nickel oxide ore such as the laterite ore, in general, is in a range of approximately 1.0 mass% to 2.0 mass%. For this reason, in consideration of the ratio of magnesium contained in the laterite ore, the Mg/Ni ratio in the ore slurry is in a range of approximately 1.0 to 2.0.

Note that, the nickel content and the magnesium content, for example, can be measured with an ICP emission spectrometry, by using the nickel oxide ore that is a raw material.

More specifically, in the adjustment of the amount of sulfuric acid added according to the Mg/Ni ratio in the ore slurry, for example, the Mg/Ni ratio is based on 1.8, and in a case where the Mg/Ni ratio in the ore slurry that is a treatment target is less than a reference value of 1.8, the amount of sulfuric acid added is adjusted such that the free sulfuric acid concentration in the obtained leached slurry is less than 50 g/L.

On the other hand, in a case where the Mg/Ni ratio in the ore slurry is greater than or equal to the reference value of 1.8, the amount of sulfuric acid added is adjusted such that the free sulfuric acid concentration in the obtained leached slurry is 50 g/L. Note that, in a case where the free sulfuric acid concentration in the leached slurry is greater than 50 g/L, the amount of sulfuric acid is in an excessive state, and thus, the amount used of sulfuric acid increases, and the amount of neutralizer used for neutralizing the free acid also increases, and it is not possible to perform an efficient treatment. In addition, it is necessary to increase the durability of leaching treatment facilities (the autoclave).

As described above, the leaching treatment method according to this embodiment, the grade of magnesium contained in the ore slurry is balanced, that is, the ratio (the Mg/Ni ratio) of the magnesium content to the nickel content is periodically monitored, and the amount of sulfuric acid added is adjusted, in accordance with the Mg/Ni ratio based on the grade, compared to a method of the related art. According to such a method, it is possible to effectively reduce the amount used of sulfuric acid while maintaining the nickel leaching rate at a high ratio. Accordingly, it is possible to efficiently perform the leaching treatment, and to effectively leach nickel of the valuable metal that is a main leaching target.

Note that, a progress degree of the leaching reaction can be adjusted by monitoring the grade of nickel in the leach residue that is discharged, and it is desirable to finely adjust the free sulfuric acid concentration, in accordance with the grade of nickel.

### <<2. Hydrometallurgical Method of Nickel Oxide Ore>>

Next, a hydrometallurgical method of nickel oxide ore to which the leaching treatment method described above is applied will be described. Note that, the hydrometallurgical method of nickel oxide ore is a hydrometallurgical method according to a high pressure acid leach method (an HPAL method) for performing leaching under a high temperature and a high pressure.

Fig. 1 is a process chart illustrating an example of a flow of the hydrometallurgical method of nickel oxide ore. The hydrometallurgical method of nickel oxide ore, includes: an ore slurrying step S1 for crushing and classifying the nickel oxide ore that is a raw material and for preparing the ore slurry; a leaching step S2 for adding a sulfuric acid to the ore slurry, and for performing the leaching treatment under a high temperature and a high pressure, resulting in the leached slurry; a preliminary neutralization step S3 for adjusting the pH of the leached slurry and for partially neutralizing a free sulfuric acid; a solid-liquid separation step S4 for separating the leach residue from the leached slurry, resulting in the leachate containing nickel and cobalt; a neutralization step S5 for adjusting the pH of the leachate and for separating an impurity element as a neutralized sediment slurry; and a sulfating step S6 for adding a sulfating agent to a neutralized liquid, resulting in a nickel and cobalt mixed sulfide.

### (1) Ore Slurrying Step

The ore slurrying step S1 is a step for preparing the ore slurry from the nickel oxide ore that is raw material ore, and is a so-called pretreatment step for the leaching treatment (the leaching step S2). Specifically, in the ore slurrying step S1, the nickel oxide ore is classified at a prescribed classification point, the oversized ore particles are removed, and then, water is added to the undersized ore particles, and thus, the ore slurry is prepared.

A classification method of the nickel oxide ore is not particularly limited insofar as the nickel oxide ore can be classified on the basis of a desired particle diameter, and can be performed by sieving using a grizzly, an oscillating sieve, or the like. In addition, a classification point for obtaining an ore slurry formed from ore particles of less than or equal to a desired particle diameter value can be suitably set as the classification point.

As described above, so-called laterite ore such as limonite ore and saprolite ore can be used as the nickel oxide ore. A nickel content in the laterite ore, in general, is approximately 1.0 weight% to 2.0 weight%. In addition, magnesium is contained in the nickel oxide ore that is the raw material ore at a prescribed ratio, as an impurity.

### (2) Leaching Step

The leaching step S2 is a step for adding a sulfuric acid to the ore slurry under a high temperature and a high pressure and for leaching the valuable metal such as nickel in the ore. Specifically, in the leaching step S2, a sulfuric acid is added to the ore slurry by using the autoclave, and stirring is performed under a condition of a temperature of approximately 220°C to 280°C and a pressure of approximately 3 MPa to 5 MPa, and thus, the leached slurry formed from the leachate and the leach residue is generated.

Here, in this embodiment, the amount of sulfuric acid that is added (the amount of sulfuric acid added) is adjusted, in accordance with the ratio (the Mg/Ni ratio) of the magnesium content to the nickel content in the ore slurry, such that the free sulfuric acid concentration in the leached slurry obtained by the leaching treatment is adjusted to a prescribed concentration.

For example, the amount of sulfuric acid added is adjusted, in accordance with the Mg/Ni ratio in the ore slurry, such that the free sulfuric acid concentration in the leached slurry is in a range of 40 g/L to 50 g/L. More specifically, the Mg/Ni ratio in the ore slurry is based on 1.8, and in a case where the Mg/Ni ratio in the ore slurry that is the treatment target is less than the reference value of 1.8, the amount of sulfuric acid added is adjusted such that the free sulfuric acid concentration in the obtained leached slurry is less than 50 g/L. On the other hand, in a case where the Mg/Ni ratio in the ore slurry is greater than greater than or equal to the reference value of 1.8, the amount of sulfuric acid added is adjusted such that the free sulfuric acid concentration in the obtained leached slurry is 50 g/L.

The Mg/Ni ratio in the ore slurry is periodically monitored, and the amount of sulfuric acid added is suitably adjusted, in accordance with a change in the Mg/Ni ratio.

As described above, the grade of magnesium contained in the ore slurry is balanced, that is, the amount of sulfuric acid added is adjusted, in accordance with the ratio (the Mg/Ni ratio) of the magnesium content to the nickel content, and thus, it is possible to effectively reduce the amount used of sulfuric acid while maintaining the nickel leaching rate at a high ratio. Accordingly, it is possible to efficiently perform the leaching treatment, and to effectively leach nickel of the valuable metal that is the main leaching target.

In addition, it is possible to reduce the free sulfuric acid concentration in the obtained leached slurry, and thus, it is also possible to effectively reduce the amount used of neutralizer at the time of neutralizing the free sulfuric acid, in the preliminary neutralization step S3 described below.

### (3) Preliminary Neutralization Step

In the preliminary neutralization step S3, the pH of the leached slurry obtained in the leaching step S2 is adjusted to a prescribed range, and thus, a neutralization treatment is performed. Specifically, for example, the pH of the leached slurry is adjusted to be in a range of approximately pH 2.8 to pH 3.2 that is a desired range.

As described above, a redundant sulfuric acid is contained in the leached slurry obtained through the leaching step S2, as a free sulfuric acid, and pH thereof is low. As described above, in the leaching step S2, the neutralizer is added to the leached slurry that is transported to a flash tank, and the free sulfuric acid is partially neutralized, but in the preliminary neutralization step S3, the neutralizer is further added to the leached slurry that is transported from the flash tank, and the pH is adjusted to be in a prescribed range, and thus, the free sulfuric acid is neutralized.

In the preliminary neutralization step S3, for example, the leached slurry is put into a neutralization treatment tank, and a prescribed amount of neutralizer is added to the leached slurry in the tank, and thus, it is possible to perform the neutralization treatment. For example, a neutralization treatment tank formed from a treatment tank of only one-stage or a neutralization treatment tank configured of a treatment tank of a plurality of stages that are arranged in series can be used as the neutralization treatment tank, and the leached slurry that is discharged from the flash tank is put into a first treatment tank on the upstream side.

Note that, as described above, in this embodiment, in the leaching treatment of the leaching step S2, the amount of sulfuric acid added is adjusted, in accordance with the Mg/Ni ratio in the ore slurry, and the free sulfuric acid concentration in the obtained leached slurry can also be effectively reduced, and thus, in the preliminary neutralization step S3, it is possible to effectively reduce the amount used of neutralizer at the time of neutralizing the free sulfuric acid.

### (4) Solid-Liquid Separation Step

In the solid-liquid separation step S4, the leached slurry is mixed with a cleaning liquid, and then, a solid-liquid separation treatment is performed by using a solid-liquid separation device such as a thickener, and thus, the leached slurry is separated into the leachate containing the valuable metal such as nickel or cobalt (an aqueous solution of crude nickel sulfate) and the leach residue.

Specifically, first, the leached slurry is diluted by the cleaning liquid, and then, the leach residue in the leached slurry is condensed as a precipitate of the thickener. Accordingly, it is possible to reduce nickel or cobalt that is attached to the leach residue, in accordance with the degree of dilution. In the real operation, it is possible to improve a recovery rate of nickel and cobalt by connecting thickeners with such a function in multiple stages.

### (5) Neutralization Step

In the neutralization step S5, the neutralizer such as calcium carbonate is added to the leachate such that the pH of the obtained neutralized liquid is less than or equal to 4, is preferably 3.0 to 3.5, and is more preferably 3.1 to 3.2, while the oxidation of the separated leachate is suppressed, and thus, the neutralized liquid that becomes a mother liquid for recovering nickel, and a neutralized sediment slurry containing trivalent iron as an impurity element are formed.

In the neutralization step S5, the neutralization treatment (a cleaning liquid treatment) is performed with respect to the leachate, as described above, and thus, an excessive acid is neutralized by using the leaching treatment of the HPAL method and a neutralization end liquid is generated, and impurities remaining in a solution, such as trivalent iron ions or aluminum ions, are removed as a neutralized sediment. At this time, in this embodiment, in the leaching step S2, the free sulfuric acid concentration in the leached slurry is effectively reduced, and thus, it is also possible to effectively reduce the amount of neutralizer used in the neutralization treatment of the neutralization step S5, and to perform an efficient treatment.

Note that, the neutralized liquid is a solution based on the leachate that is obtained by performing the leaching treatment of the sulfuric acid (the leaching step S2), and is a sulfuric acid acidic solution containing nickel and cobalt. Such a neutralized liquid is formed of a reaction start liquid of a sulfating reaction in the sulfating step S6 described below, and the total concentration of a nickel concentration and a cobalt concentration is not particularly limited, but is generally in a range of 2 g/L to 6 g/L. The nickel concentration is generally in a range of 2 g/L to 5 g/L, and the cobalt concentration is generally in a range of 0.1 g/L to 0.6 g/L.

### (6) Sulfating Step (Nickel Recovery Step)

In the sulfating step S6, the neutralized liquid that is a sulfuric acid aqueous solution containing nickel and cobalt is used as a sulfating reaction start liquid, and a sulfating agent such as hydrogen sulfide gas is blown into the sulfating reaction start liquid, and thus, the sulfating reaction occurs, and a sulfide of nickel and cobalt containing fewer impurity components (a mixed sulfide), and a barren liquor in which the concentration of nickel or cobalt is stabilized at a low level (a sulfated liquid) are generated.

A sulfating treatment in the sulfating step S6 can be performed by using a sulfating reaction tank or the like, hydrogen sulfide gas is blown into the sulfating reaction start liquid that is introduced to the sulfating reaction tank, in a gas phase portion of the reaction tank, and the hydrogen sulfide gas is dissolved in the solution, and thus, the sulfating reaction occurs. According to such a sulfating treatment, nickel and cobalt contained in the sulfating reaction start liquid are immobilized and recovered as a sulfide.

Note that, after the sulfating reaction is ended, a slurry containing the obtained sulfide of nickel and cobalt is put into a precipitation separation device such as a thickener, and a precipitation separation treatment is performed, and thus, only the sulfide is separated and recovered from a bottom portion of the thickener. On the other hand, an aqueous solution component is overflowed from an upper portion of the thickener, and thus, is recovered as the barren liquor.

### EXAMPLES

Hereinafter, examples of the present invention will be described in more detail, but the present invention is not limited to the following examples. Note that, the content of metal used in examples and comparative examples was measured by an ICP emission spectrometry.

### (Example of Related Art)

An ore slurry was prepared by using laterite ore having a composition shown in Table 1 described below as raw material ore, the ore slurry was put into an autoclave, and then, 98% of a sulfuric acid was added to the ore slurry, and a sulfuric acid leaching treatment was performed under pressure at a high temperature, and thus, a leached slurry was obtained.

**[Table 1]**

| (mass%) | Ni | Co | Fe | Mg | Zn |
|---|---|---|---|---|---|
| Nickel oxide ore | 1.00 | 0.09 | 42.25 | 1.80 | 0.04 |

A leaching treatment condition was as follows.

### [Leaching Treatment Condition]

Ore Slurry Concentration: 30 mass%
Leaching Temperature: 245°C
Leaching Time: 60 minutes
Amount of Sulfuric Acid Added: 350 kg per 1 ton of Ore
Free Sulfuric Acid Concentration in Final (at End of Leaching)
Leached Slurry: 50 g/L

As a result of such a leaching treatment, a nickel leaching rate of greater than or equal to 88% was obtained for a leaching reaction time of 60 minutes.

### (Examples 1 to 4)

In Examples 1 to 4, as shown in Table 2, a sulfuric acid was added to the ore slurry having a composition of the nickel content and the magnesium content of the laterite ore that was the raw material ore, with adjusting the amount of sulfuric acid added, in accordance with the Mg/Ni ratio in the ore slurry, such that a target nickel leaching rate of 88% was obtained, and the free sulfuric acid concentration in the leached slurry at the end of the leaching was adjusted to a prescribed optimal concentration.

### (Comparative Examples 1 to 4)

In Comparative Examples 1 to 4, as shown in Table 2, the leaching treatment was performed as with the examples, except that a sulfuric acid was added such that the free sulfuric acid concentration in the leached slurry at the end of the leaching was constant at 50 g/L.

**[Table 2]**

| | Ni content [%] | content [%] | Mg/Ni ratio | Free sulfuric acid concentration at end of leaching [g/L] | Ni leaching rate [%] | Increase - decrease rate of amount used of sulfuric acid[%] |
|---|---|---|---|---|---|---|
| Example 1 | 1.0 | 1.0 | 1.0 | 42 | 88 | -5.8 |
| Example 2 | 1.0 | 1.2 | 1.2 | 44 | 88 | -4.2 |
| Example 3 | 1.0 | 1.5 | 1.5 | 47 | 88 | -2.0 |
| Example 4 | 1.0 | 1.7 | 1.7 | 48 | 88 | -1.3 |
| Example of related art | 1.0 | 1.8 | 1.8 | 50 (Reference value) | 88 | 0.0 |
| Comparative Example 1 | 1.0 | 1.0 | 1.0 | 50 | 88 | -4.0 |
| Comparative Example 2 | 1.0 | 1.2 | 1.2 | 50 | 88 | -3.0 |
| Comparative Example 3 | 1.0 | 1.5 | 1.5 | 50 | 88 | -1.8 |
| Comparative Example 4 | 1.0 | 1.7 | 1.7 | 50 | 88 | -0.8 |

As shown in the results of Table 2, in Example 1, the amount of sulfuric acid added was adjusted such that the free sulfuric acid concentration at the end of the leaching was adjusted to 42 g/L, in accordance with the Mg/Ni ratio in the ore slurry, and thus, it was possible to reduce the amount used of sulfuric acid by -5.8%, compared to 350 kg per 1 ton of the ore in the example of the related art. It was found that the Mg/Ni ratio was the same as 1.0, but it was possible to considerably reduce the used amount while maintaining the nickel leaching rate, compared to Comparative Example 1 in which a sulfuric acid was added such that the free sulfuric acid concentration was adjusted to 50 g/L.

In addition, in Examples 2 to 4, it was possible to effectively reduce the amount used of sulfuric acid while maintaining the nickel leaching rate, compared to each of Comparative Examples 2 to 4.

As described above, it was found that it was possible to search the free sulfuric acid concentration at which the target nickel leaching rate was obtained, in accordance with the (the grade) content of magnesium in the ore, but the optimal free sulfuric acid concentration was different in accordance with the magnesium content. This indicates that the degree of inhibition with respect to the nickel leaching reaction is different in accordance with the amount of magnesium present. Therefore, it was found that in a case where the magnesium content was low, it was possible to obtain the target nickel leaching rate even by considerably decreasing the free sulfuric acid concentration at the end of the optimal leaching (that is, even not by increasing a reaction velocity more than necessary). That is, it was found that the amount of sulfuric acid added was adjusted, in accordance with the Mg/Ni ratio in the ore slurry, and thus, it was possible to effectively suppress the amount used of sulfuric acid while maintaining the nickel leaching rate.

## Claims

1. A leaching treatment method for performing a leaching treatment by adding a sulfuric acid to a slurry of magnesium-containing nickel oxide ore (an ore slurry), resulting in a leached slurry formed from a leachate containing nickel and a leach residue,
wherein an amount of sulfuric acid added is adjusted, in accordance with a ratio (a Mg/Ni ratio) of a magnesium content to a nickel content in the ore slurry, such that a free sulfuric acid concentration in the obtained leached slurry is adjusted to a prescribed concentration.

2. The leaching treatment method according to claim 1,
wherein the amount of sulfuric acid added is adjusted such that the free sulfuric acid concentration in the leached slurry at an end of the leaching treatment is in a range of 40 g/L to 50 g/L.

3. The leaching treatment method according to claim 2,
wherein in a case where the Mg/Ni ratio in the ore slurry is less than 1.8, the amount of sulfuric acid added is adjusted such that the free sulfuric acid concentration in the leached slurry at the end of the leaching treatment is less than 50 g/L.

4. The leaching treatment method according to any one of claims 1 to 3,
wherein the nickel content in the ore slurry is in a range of 1.0 mass% to 2.0 mass%.

5. A hydrometallurgical method of nickel oxide ore for recovering a valuable metal including nickel from the nickel oxide ore by using a sulfuric acid, the method comprising:
a leaching step for performing a leaching treatment by adding a sulfuric acid to a slurry of the nickel oxide ore (an ore slurry), resulting in a leached slurry formed from a leachate containing nickel and a leach residue,
wherein in the leaching step, an amount of sulfuric acid added is adjusted, in accordance with a magnesium content to a nickel content (a Mg/Ni ratio) in the ore slurry, such that a free sulfuric acid concentration in the obtained leached slurry is adjusted to a prescribed concentration.
